# EUROPEAN PATENT APPLICATION

(11) **EP 0 750 211 A1**
(43) Date of publication of application: **27.12.1996**
(21) Application number: 95941897.1
(22) Date of filing: 26.12.1995
(51) Int. Cl.: G02F 1/1337, G02F 1/1333

(54) **LIQUID-CRYSTAL DISPLAY ELEMENT AND PROCESS FOR PRODUCTION THEREOF**

(30) Priority: 27.12.1994 JP 326486/94
(71) Applicant: SEIKO EPSON CORPORATION, Shinjuku-ku Tokyo 163-08 (JP)
(72) Inventor: YAZAKI, Masayuki, Nagano-ken 392 (JP); KOBAYASHI, Hidekazu, Nagano-ken 392 (JP); YAMADA, Shuhei, Nagano-ken 392 (JP); IISAKA, Hidehito, Nagano-ken 392 (JP); TSUCHIYA, Yutaka, Nagano-ken 392 (JP); CHINO, Eiji, Nagano-ken 392 (JP)
(74) Representative: Hoffmann, Eckart, Dipl.-Ing.
(86) International application number: PCT/JP95/02696
(87) International publication number: WO 96/20425

(57) **Abstract**

Reflective electrodes (107) are provided on a substrate (108) and ITO transparent electrodes (102) are provided on a substrate (101). Orientation films (106, 103) composed of polyimide are respective provided on both of the substrates (108, 101). The orientation films (106, 103) are respectively rubbed in predetermined directions. A polymer precursor and liquid crystal containing a predetermined amount of a chiral agent are interposed between the two substrates (108, 101), and the polymer is separated out through irradiation by ultraviolet rays. The liquid crystal (105) and polymer (104) have a mutually orientated and dispersed structure, and the liquid crystal (105) has a predetermined twisting angle in a predetermined twisting direction. As a result, the incident surface which efficiently scatters light substantially matches the surface containing the up-and-down direction of the liquid crystal display device and the normal direction to the surface of the top substrate (108), so that a polymer dispersed-type liquid crystal display device is obtained which is particularly bright in a specific direction in accordance with the application.

## Description

### BACKGROUND OF THE INVENTION

### 1. Field of the Invention

The present invention relates to a liquid crystal display device and a method for producing it, and more particularly, to a liquid crystal display device for use as the display component of an information equipment terminal, television or home appliance product, and a method of producing it.

### 2. Description of Related Art

In recent years, as information equipment has become more compact and lightweight, display devices to be mounted on such equipment have been sought which consume less power. TN type liquid crystal display devices are utilized as reflective displays in small display capacity equipment, while FTN type liquid crystal display devices are utilized in mid-range display capacity equipment. Furthermore, uses wherein an information input apparatus such as a tablet or the like is included in the reflective-type display are also expanding, and brightness and good visibility are required in reflective-type liquid crystal display devices.

However, because TN type and FTN type liquid crystal display devices that use conventional polarizing plates have low light utilizing efficiency, the problem arises that these devices become dark when made reflective, and moreover, an extremely dark display results when an information input apparatus such as a tablet or the like is included. In addition, because a reflective plate is placed over the polarizing plate on the back surface of the substrate on the back side in order to make a TN type or FTN type reflective model, double images occur in the display, small characters are unclear, and there are problems with visibility.

On the other hand, bright reflective-type displays that do not use polarizing plates have come to be developed recently. For example, a liquid crystal display device which uses a polymer dispersed liquid crystal in which liquid crystal and polymer are dispersed one in the other, and which performs control so that the display is transparent when an electric field is applied and the light is scattered when no electric field is applied has been disclosed (JP-A-58-501631), and liquid crystal display devices which perform control so that the light is scattered when an electric field is applied and the display is transparent or light is absorbed when no electric field is applied have been also been disclosed (EP-A-0 488 116, JP-A-4-227684, JP-A-5-119302).

In particular, in the polymer dispersed type liquid crystal display device using a polymer dispersed liquid crystal, disclosed in EP-A-0 488 116, in which the liquid crystal and polymer are mutually orientated and dispersed one in the other, it is possible to also use the electrodes as light reflecting surfaces because no polarizing plate is used, and in this case, visibility, high precision and brightness which cannot be achieved in the TN and FTN type devices that require polarizing plates, are obtained, and it is possible to obtain a reflective display with superior display quality.

However, with the conventional art which has been disclosed with regard to polymer dispersed type liquid crystal display devices that use polymer dispersed liquid crystal in which the liquid crystal and polymer are mutually orientated and dispersed one in the other, no control method for the light scattering properties which influence the viewing angle properties and brightness has been disclosed. In particular, when the device is used as a reflective type display, the influence which the usage environment and the display positioning has on the display quality is large, but no design method for a liquid crystal display device which takes these points into consideration has been disclosed.

When the liquid crystal display device is mounted on portable equipment, the usage environment can roughly be separated into indoors and outdoors. Outdoors, a brightness approximately 100 times that in a normal office exists, and because the scattering type reflective display can show an extremely bright display state in an outdoor environment, there is no need to worry about brightness in an outdoor environment. In contrast to this, it is important to take into account the usage of the device in an indoor environment which requires illumination, and it is essential that the device scatters the light effectively in an environment where the sunlight shining down on the device or the incident light of illumination from the ceiling is large.

In addition, when the liquid crystal display device is mounted on portable equipment, it is necessary to control the viewing angle properties from the standpoint of privacy protection.

In consideration of the foregoing, it is an objective of the present invention to provide a liquid crystal display device which controls the light scattering properties of a polymer dispersed type liquid crystal display device using a polymer dispersed liquid crystal with the liquid crystal and polymer mutually orientated and the polymer dispersed in the liquid crystal, which is particularly bright in a specific direction in accordance with the application, and in which the contrast ratio is high, and a method for producing such a device.

### SUMMARY OF THE INVENTION

A liquid crystal display device in accordance with the invention is of the type comprised of a liquid crystal and a polymer having a refractive index anisotropy and being dispersed therein, which are mutually orientated, and which are interposed between a top substrate on which first electrodes are formed and the surface is orientation processed, and a bottom substrate on which second electrodes facing these first electrodes are formed and the surface is orientation processed. The light scattering properties upon applying an electric field are adjusted by a first rubbing direction caused by the orientation processing performed on the top substrate, a second rubbing direction caused by the orientation processing performed on the bottom substrate, the twisting angle of the liquid crystal, and the twisting direction of the liquid crystal. Light incident along a plane of incidence which substantially matches a plane containing the direction normal to the surface of the top substrate of the liquid crystal display and a predetermined first direction within the top substrate surface is efficiently scattered.

In this way, light incident along a plane of incidence which substantially matches a plane containing a predetermined first direction in the top substrate surface and the normal direction to the surface of the top substrate of the liquid crystal display device is efficiently scattered, and consequently, a liquid crystal display device is obtained which is bright in a specific direction in accordance with the application of the liquid crystal display device.

Because this first direction is the direction determined by the first rubbing direction of the top substrate rotated angularly through about half the angle formed by the first rubbing direction and the second rubbing direction, moving from the first rubbing direction of the top substrate to the second rubbing direction of the bottom substrate, it is possible to easily design a liquid crystal display device having brightness in a specific direction.

The predetermined first direction is the vertical direction of the top substrate in the usage state of the liquid crystal display device. In this way, a liquid crystal display device is obtained which is suitable for usage in environments with large light incidence from the upward direction, particularly indoors.

If the first rubbing direction of the top substrate is a direction rotated angularly by about half the twisting angle of the liquid crystal, from the left-to-right direction of the top substrate in the usage state of the liquid crystal display device in the twisting direction of the liquid crystal, and the second rubbing direction of the bottom substrate is a direction having linear symmetry with the first rubbing direction with respect to the vertical direction of the top substrate, it is possible to easily obtain a liquid crystal display device which is bright in the up-and-down direction in the usage state of the liquid crystal display device.

It is preferable for the liquid crystal to contain a chiral agent in a predetermined amount in accordance with the desired twisting angle of the liquid crystal.

It is preferable for the liquid crystal to contain a dichroic dye.

It is preferable for the second electrodes of the bottom substrate to be formed of a reflective material, and the present invention may be suitably applied to a reflective-type liquid crystal display device.

A method is provided for producing a liquid crystal display device comprising a liquid crystal and a polymer having refractive index anisotropy and being dispersed therein, which are mutually orientated, and which are interposed between a top substrate on which first electrodes are formed and the surface is orientation processed, and a bottom substrate on which second electrodes facing these first electrodes are formed and the surface is orientation processed, with the liquid crystal being twist orientated with a predetermined twisting angle in a predetermined twisting direction between the top substrate and the bottom substrate, said method comprising the steps of: forming the first electrodes on the top substrate; forming a first orientation film on the top substrate; rubbing the first orientation film in a first rubbing direction rotated angularly by about half the twisting angle of the liquid crystal from the left-to-right direction of the top substrate in the usage state of the liquid crystal display device in the twisting direction of the liquid crystal; forming on the bottom substrate, second electrodes capable of facing the first electrodes; forming a second orientation film on the bottom substrate; rubbing the second orientation film in a second rubbing direction which is a direction having linear symmetry or point symmetry with the first rubbing direction with respect to the vertical direction of the top substrate in the usage state of the liquid crystal display device; forming a vacuum panel from the first substrate and the second substrate following this; placing a liquid crystal mixture material composed of a liquid crystal composite and a polymer or polymer precursor between the first and second substrates of the vacuum panel; and, following this, separating out the polymer from the liquid crystal mixture material to cause phase separation between the liquid crystal and the polymer.

By producing a liquid crystal display device using this method, it is possible to easily obtain a liquid crystal display device which is bright in the up-and-down direction in the usage state of the liquid crystal display device.

It is preferable for the liquid crystal to contain a chiral agent in a predetermined amount in accordance with the desired twisting angle of the liquid crystal, and setting the liquid crystal to a predetermined twisting angle is easy.

In addition, it is preferable to use an ultraviolet light hardening monomer as the polymer precursor and to polymerize the monomer by irradiating the liquid crystal mixture material with ultraviolet rays to separate the polymer, thereby phase-separating the liquid crystal and the polymer.

### BRIEF DESCRIPTION OF DRAWINGS

- Fig. 1: is a cross-sectional view showing the liquid crystal display device of a first embodiment of the present invention;
- Figs. 2A through 2D: are drawings showing the top substrate rubbing direction and the bottom substrate rubbing direction in the first embodiment of the present invention;
- Fig. 3A: is a drawing showing the relationship between the twisting angle of the liquid crystal display device and the maximum reflectance in the first embodiment of the present invention;
- Fig. 3B: is a drawing showing the relationship between the twisting angle of the liquid crystal display device and the threshold voltage V10 and the saturation voltage V90 in the first embodiment of the present invention;
- Figs. 4A through 4F: are drawings showing the scattering directivity of the liquid crystal display device of the first embodiment of the present invention;
- Fig. 5: is a cross-sectional view showing the liquid crystal display device of a second embodiment of the present invention; and
- Fig. 6: is a cross-sectional view showing the liquid crystal display device of a third embodiment of the present invention.

### DETAILED DESCRIPTION OF PREFERRED EMBODIMENTS

### First Embodiment

In the present embodiment, the description will be made for a liquid crystal display device with a twist condition wherein the twisting orientation states of the liquid crystal on orientation layers on which parallel orientation processing is conducted are about 0°, 90°, 180°, 270° or 360°.

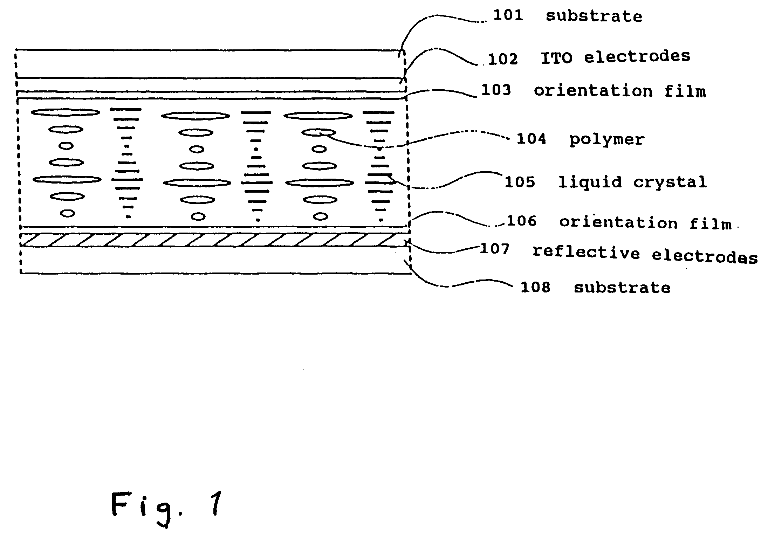

Figure 1 shows a cross-sectional view of the liquid crystal display device of the present embodiment. A chromium film was formed on the bottom substrate 108 to a thickness of about 2000 Å (200 nm) through sputtering, following which reflective pixel electrodes 107 were formed by patterning the chromium film. The surface area of each pixel electrode was 15 mm².

ITO (Indium Tin Oxide) was formed on the top substrate 101 to a thickness of about 1500 Å (150 nm) through sputtering, following which transparent electrodes 102 were formed by patterning the ITO . An orientation film 106 was formed on the reflective pixel electrodes 107, an orientation film 103 was formed on the ITO electrodes 102. Between the orientation film 103 and the orientation film 106, a liquid crystal 105 and polymer 104 were provided so that they were mutually orientated and the latter dispersed in the former.

First, after the reflective pixel electrodes 107 had been formed on the substrate 108 and the transparent electrodes 102 had been formed on the substrate 101, Optomer AL 3046 (produced by Japan Synthetic Rubber Co. Ltd.) was flexographed as an orientation agent on these two substrates 108 and 101, and was then calcinated for one hour at 180° C to form polyimide films 106 and 103. Next, a rubbing process was accomplished using a rotating rubbing apparatus.

Next, the substrate perimeters of the two substrates 108 and 101 were bonded and fixed with a gap of about 5 µm in between to obtain a vacuum panel.

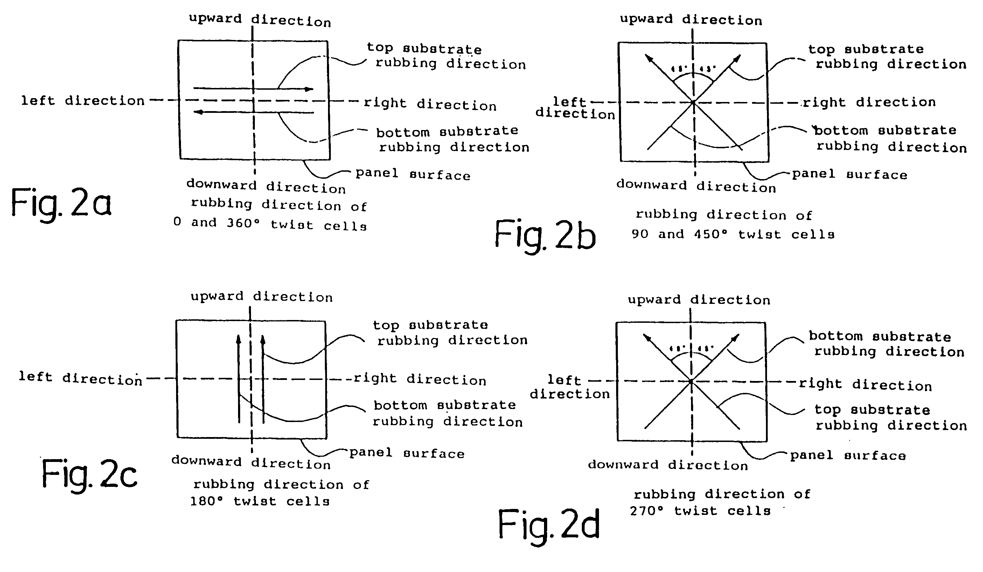

With different directions of the bottom substrate rubbing and the top substrate rubbing six different twist angle of about 0°, 90°, 180°, 270°, 360° and 450° were obtained, as shown in Fig. 2A through Fig. 2D. That is to say, as shown in Fig. 2A, for a twist angle of about 0° or 360°, the top substrate is rubbed toward the right of the panel and the bottom substrate is rubbed toward the left of the panel. As shown in Fig. 2B, for a twist angle of about 90° or 450°, the top substrate is rubbed from the bottom to the top of the panel in a direction inclined about 45° to the right from the upward direction of the panel, and the bottom substrate is rubbed from the bottom to the top of the panel in a direction inclined about 45° to the left from the upward direction of the panel. As shown in Fig. 2C, for a twist angle of about 180°, both the top substrate and bottom substrate are rubbed from the top to the bottom of the panel in the upward direction of the panel. As shown in Fig. 2D, for a twist angle of about 270°, the top substrate is rubbed from the bottom to the top of the panel in a direction inclined about 45° to the left from the upward direction of the panel, and the bottom substrate is rubbed from the bottom to the top of the panel in a direction inclined about 45° to the right from the upward direction of the panel.

Next, the liquid crystal and polymer precursor mixture which was sealed in this vacuum panel will be described. A mixture of TL-213 (produced by Merck & Co. Inc.) and BL007 (produced by Merck & Co. Inc.) in about a 7:3 weight ratio was used as the liquid crystal (hereafter called liquid crystal A), and in addition, M361, SI512 and M137 (all produced by Mitsui Toatsu Senryo K.K.) were mixed into this mixture in ratios of about 1.4%, 1.7% and 0.4% by weight, respectively, as dichroic dyes. As a chiral agent, right-turning R-1011 (produced by Merck & Co. Inc.) was added to the liquid crystal material in the amounts of about 0% by weight, 0.15% by weight, 0.30% by weight, 0.45% by weight, 0.60% by weight and 0.75% by weight for the about 0°, 90°, 180°, 270°, 360° and 450° cells, respectively, shown in Figs. 2A through 2D. In addition, about 7% by weight of biphenyl methacrylate was added to the above mixture as the polymer precursor. The above was heated and mixed to achieve a liquid crystal mixture material in a liquid crystal state, following which the mixture was vacuum sealed in the above-described vacuum cell.

The liquid crystal mixture material which was sealed in respective panels had twisting orientation states of about 0°, right 90°, right 180°, right 270°, right 360° and right 450° in accordance with the rubbing directions and the amount of the chiral agent. Following this, each panel was irradiated for seven minutes by ultraviolet rays having a luminous intensity of about 5 mW/cm² (wavelength 350 nm) to polymerize the polymer precursor, and through this the polymer was separated from the liquid crystal mixture material and the liquid crystal display device of the present embodiment as shown in Fig. 1 was completed.

The liquid crystal 105 exhibited the same states as before ultraviolet ray irradiation, and in addition, the fact that the polymer 104 and the liquid crystal 105 took on a structure that was mutually orientated and wherein the polymer was dispersed in the liquid crystal between the substrates was verified by a polarizing microscope.

The electro-optical properties of the liquid crystal display device of the present embodiment which was obtained in this manner exhibited threshold properties, and a normally black property was obtained wherein the reflectance increases with the voltage being applied. That is to say, when the voltage is off, a black display is obtained through the absorption by the dichroic dye, and when a sufficient voltage is applied, the liquid crystal 105 is orientated in the direction of the electric field, and consequently, the orientation directions of the polymer and the liquid crystal differ, and points of discontinuity were created in the refractive index in the medium, so that a light scattering state is achieved. At this time, the absorption is extremely small because the dichroic dye is also orientated in the direction of the electric field, so a white display is obtained.

Next, the results of measurements of the electro-optical properties of the liquid crystal display device of the present embodiment will be shown. The electro-optical properties were measured by applying a 100 Hz square wave to the liquid crystal display device using a xenon lamp ring light source, causing light to be incident from all sides (360°) in a direction inclined by 30° from the normal direction (panel normal) of the liquid crystal display device surface (30° angle of incidence), and detecting the response reflected light of the incident light in the normal direction. The detected surface area was taken to be 2 mm φ. The reflectance rate of 100% was standardized at the luminosity of the standard diffusion plate surface. Hereafter, the threshold voltage value V10 is defined to be the voltage value corresponding to a reflectance of 10% with the (maximum reflectance - minimum reflectance) = 100%, and the saturation voltage value V90 is defined to be the voltage value corresponding to a reflectance of 90%. In addition, the scattering directivity measured the change in the reflectance in the panel normal direction using parallel light rays and with the angle ψ between the parallel light rays and the panel normal and the panel rotation angle φ as parameters.

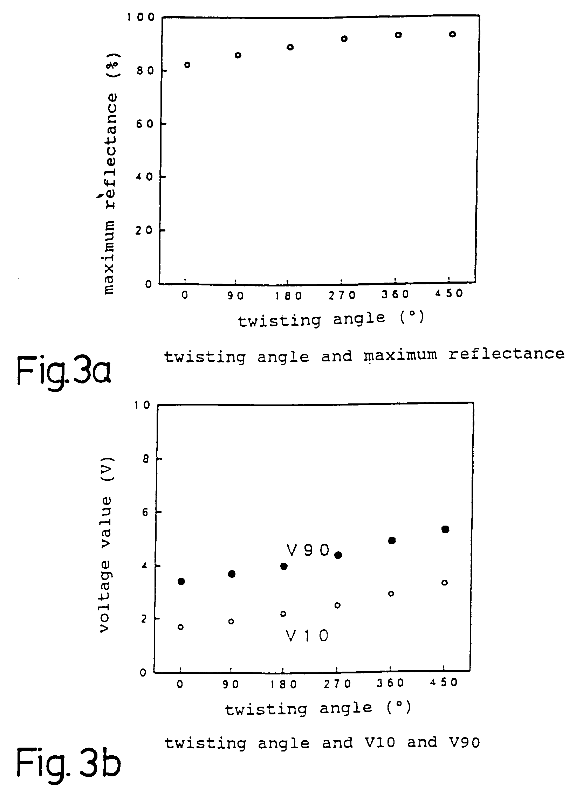

Figure 3A shows the relationship between the twisting angle and the maximum reflectance, of the liquid crystal display device of the present embodiment, and Fig. 3B shows the relationship between the twisting angle and the threshold voltage value V10 and saturation voltage value V90. The maximum reflectance becomes larger as the twisting angle becomes larger, and is substantially constant for twisting angles of about 270° and larger. In addition, the threshold voltage value V10 and the saturation voltage value V90 both become larger as the twisting angle becomes larger.

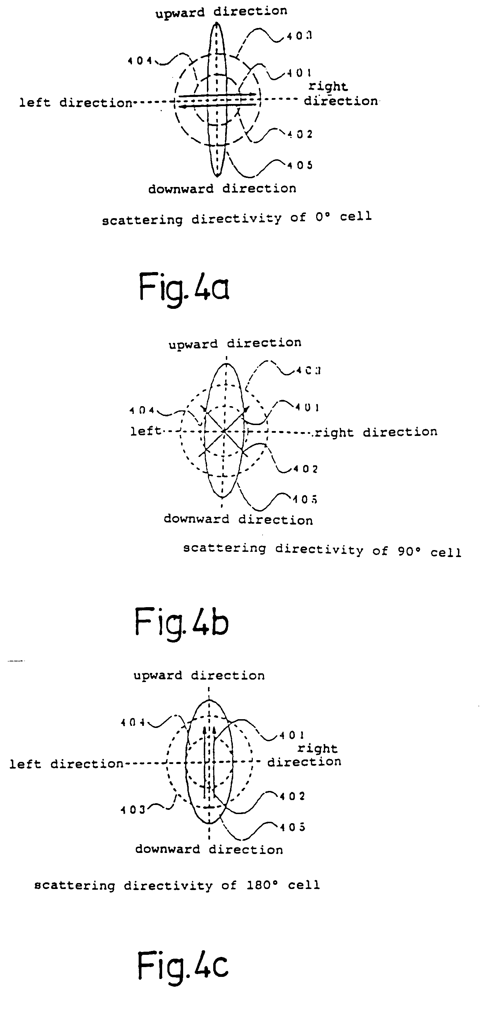

Figures 4A through 4F show the scattering directivity for a ψ = 30° incidence when the saturation voltage is applied. In Figs. 4A through 4F, reference number 401 designates the top substrate rubbing direction, reference number 402 designates the bottom substrate rubbing direction, reference number 403 designates a reflectance rate of 100%, reference number 404 designates a reflectance rate of 50% and reference number 405 designates the reflectance rate of the liquid crystal display device for a ψ 30° incidence.

As shown in Figs. 4A through 4F, the scattering regularly exhibited directivity with efficient scattering in the plane containing the panel normal and the axis which is obtained by rotating the top substrate rubbing axis from the top substrate rubbing axis direction toward the bottom substrate rubbing axis direction by about half the angle between the top substrate rubbing axis and the bottom substrate rubbing axis. In addition, in the twisting states and rubbing directions shown in Figs. 2A through 2D, a scattering directivity state was obtained which efficiently scattered light in the plane containing the panel normal and the panel up-and-down direction.

The scattering exhibited stronger directivity the smaller the twisting angle, and in addition, the maximum reflectance was higher the larger the twisting angle and was substantially constant at about 270° and larger angles. If this is expressed by what is perceived by a user it means that the panel becomes brighter as the twisting angle increases under uniform lighting conditions caused by a diffuse light source, and the brightness is constant at a twist angle of about 270° and above. In addition, in environments with strong specific directional light, the panel was the brighter the smaller the twisting angle when the panel was optimally positioned (for example, making the up-and-down direction of the panel the direction of the specific directional light), while on the other hand, the view angle properties increased by increasing the twisting angle.

The usage state of portable equipment can roughly be separated into indoors and outdoors, these indoor and outdoor environments combining uniform lighting conditions with strong specific directional light conditions. Outdoors, a brightness approximately 100 times that of a normal office exists, and because the scattering type reflective display can show an extremely bright display state in an outdoor environment, there is no need to worry about brightness in an outdoor environment. In contrast to this, it is important to take into account the usage of the device in an indoor environment which requires illumination, and it is essential that the device scatters the light effectively in an environment where the sunlight shining down on the device or the incident light of illumination from the ceiling is too strong. With the present embodiment, the direction which strongly scatters light matches the vertical axis of the panel, and hence a bright display state is obtained even indoors. In addition, by adjusting the twisting angle, view angle properties are obtained which are suitable for the application. As described above, with the present embodiment it is possible to control the scattering directivity through the rubbing direction and the twisting state of the liquid crystal. In addition, with the present invention the scattering has directivity, and consequently, a display which is bright and brilliant is obtained.

### Second Embodiment

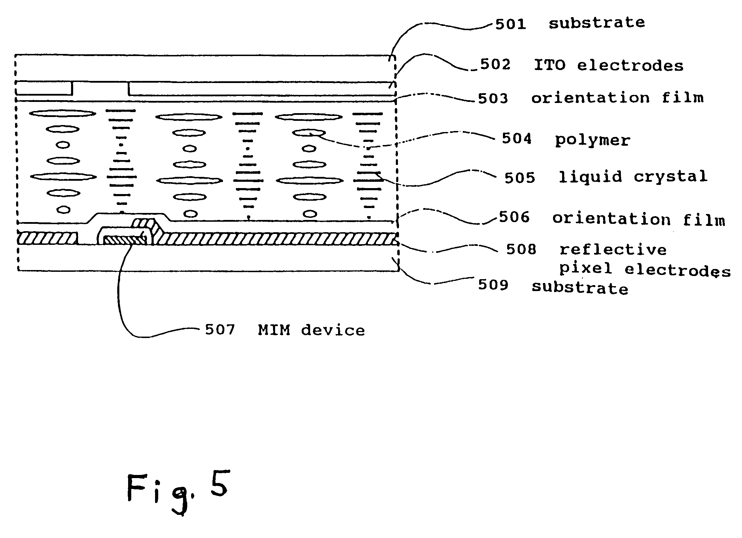

An example of the present embodiment is provided hereafter, wherein in the structure of the first embodiment, the twisting angle of the liquid crystal is taken to be about 270°, and a two-terminal device (MIM) has been formed on each pixel electrode. Fig. 5 shows the cross-sectional drawing of the liquid crystal display device of the present embodiment.

The bottom substrate 509 was taken to be a MIM substrate produced through two photo processes. In the substrate production process, Ta was sputtered and after this was patterned (first photo process) into a desired shape, and then the Ta was anodized to form an insulating film of Ta₂O₅ on the Ta surface. Next, Cr was sputtered and after this was patterned (second photo process) into a desired shape, thereby forming MIM devices 507 composed of Ta-Ta₂O₅-Cr and reflective pixel electrodes 508 composed of Cr. On the other hand, ITO was sputtered on the top substrate 501 and was patterned into a stripe form to obtain ITO electrodes 502. Next, Optomer AL 3046 (produced by Japan Synthetic Rubber Co. Ltd.) was flexographed onto the two substrates and then calcinated for about one hour at about 180° C, and polyimide films 503 and 506 were formed. Following this, a rubbing process was conducted on the two substrates by means of a rotational rubbing apparatus. The rubbing directions were the same as that of the 270° twist orientation cell of the first embodiment (see Fig. 2D). The two substrates thus obtained where bonded and anchored about the substrate perimeter with a gap of about 5 µm to produce a vacuum panel with a 5 inch diagonal.

Next, a liquid crystal mixture material composed of a liquid crystal, a dichroic dye, a chiral agent and a polymer precursor was vacuum sealed into the above-described vacuum panel, the same as in the first embodiment. R-1011 (produced by Merck & Co. Inc.) was added in the amount of about 0.45% by weight as a chiral agent in order to obtain the 270° twisting. The liquid crystal mixture material which was sealed into the panel exhibited a right twisting 270° orientation state from the top substrate rubbing axis to the bottom substrate rubbing axis.

Following this, the panel was irradiated for about 7 minutes by ultraviolet rays having luminous intensity of about 5 mW/cm² (wavelength 350 nm), the polymer was separated from the liquid crystal mixture material, and the liquid crystal display device of the present embodiment as shown in Fig. 5 was completed. The liquid crystal 505 exhibited a right twisting 270° orientation state, the same as before ultraviolet ray irradiation, and in addition, the fact that the polymer 504 and the liquid crystal 505 between the substrates took on a structure that was mutually orientated and dispersed was verified by a polarizing microscope.

When the liquid crystal display device thus obtained was driven with a duty of about 1/480, the reflectance of the sample was about 72% and the contrast ratio was about 15 under the measurement conditions of the first embodiment. In addition, a bright display was obtained in indoor environments because light from the upward direction of the panel could be efficiently scattered. Furthermore, when a non-glare process and non-reflection coating were applied to the surface of this liquid crystal display device, specular reflections of the surrounding are reduced and the visibility improved dramatically.

In addition, with the present embodiment, reflective electrodes were placed on the MIM substrate, but it is also possible to form reflective electrodes on the opposing substrate.

### Third Embodiment

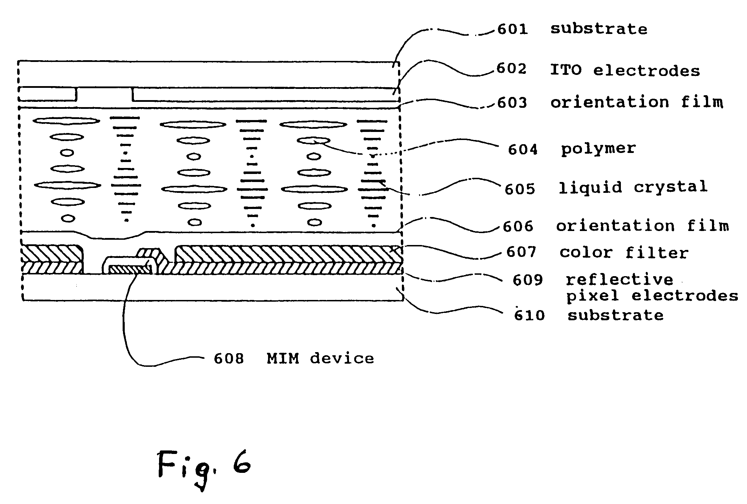

Hereafter, with the present embodiment an example is presented wherein a color filter is formed on the reflective electrodes in the structure of the second embodiment. Figure 6 shows a cross-sectional view of the liquid crystal display device of the present embodiment. On the bottom substrate 610, wiring and MIM devices 608 and reflective pixel electrodes 609 were formed, the same as in the second embodiment. Pigment color filters 607 (red, green and blue) were formed at each pixel respectively on these reflective pixel electrodes 609. On the other hand, ITO electrodes 602 were formed on the top substrate 601, the same as in the second embodiment. The liquid crystal display device of the present embodiment was completed using the above-described substrates, the same as in the second embodiment. The rubbing directions and twisting angles also had the same conditions as in the second embodiment.

The liquid crystal display device thus obtained was such that a black display was obtained through absorption by the dichroic dye when the voltage was off, and a color display was obtained by applying voltages to each color pixel.

In addition, when driven at a duty of about 1/480, the reflectance of the sample was about 24% and the contrast ratio was about 12 under the measurement conditions of the first embodiment. In addition, an 8 level gray scale display and 512 colors display were possible. In addition, a bright display was obtained in indoor environments because light from the upward direction of the panel could be efficiently scattered. Furthermore, when an anti-glare process and anti-reflection coating were applied to the surface of the liquid crystal display device, specular reflections of the surrounding were reduced and the visibility improved dramatically.

In the embodiment, transparent electrodes were placed on the MIM substrate, but it is also possible to place the reflective electrodes on the MIM substrate and to form color filters on the top thereof.

In addition, the composition of the color filters used in the embodiments is not restricted to red, green and blue, as it is also possible to use other compositions provided that natural colors can be reproduced. In addition, the color filters can also be placed on the top substrate.

The preferred embodiments of the present invention were described above, but these are intended to be illustrative and not limiting.

For example, in the above-described embodiments 1 through 3, the structure was such that a dichroic dye was added to the liquid crystal, but this is not absolutely necessary. When this dye is not added, the black level rises somewhat when voltages are not applied, but the maximum reflectance increases when voltage is applied because the light absorption by the dye disappears, so the brightness improves. In addition, when reflective electrodes with low reflectance are used, or when a light-absorbing layer is provided on the reflective electrodes, it is particularly unnecessary to add the dichroic dye.

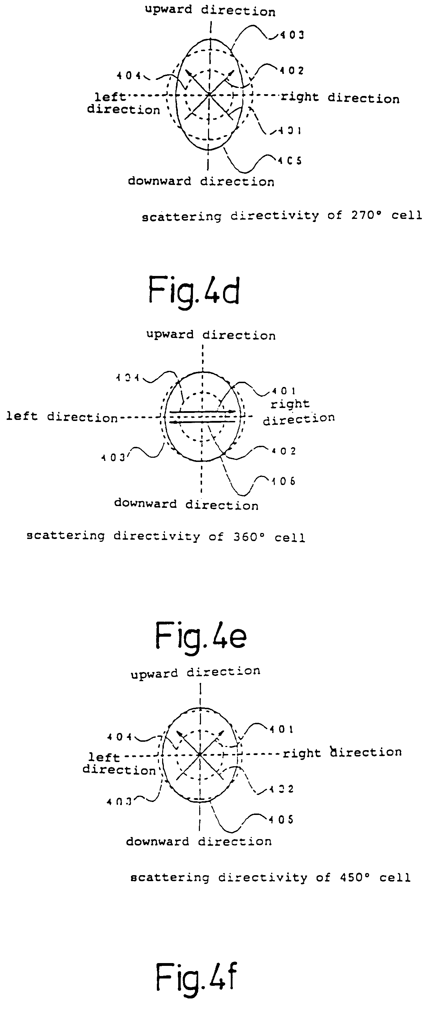

In addition, in the above-described embodiments 1 through 3, structures of the six values of about 0°, 90°, 180°, 270°, 360° and 450° for the twisting angle were explained, and structures with about 270° as the twisting angle were explained in the second and third embodiments, but this is intended to be illustrative and not limiting, for the structure may be selected appropriately in the range of about 0 to 450°, in accordance with the usage environment and application. In addition, the rubbing direction is determined by the twisting direction and twisting angle of the liquid crystal in accordance with the above-described principles. In addition, the scattering directivity has axial symmetry as shown in Fig. 4, and consequently, it is fine for the rubbing directions of the top substrate and bottom substrate to be respectively rotated about 180°.

The chiral component which determines the twisting angle is added in the optimum amount in accordance with the twisting angle. For the chiral agent, a material which is used in normal TN and STN type liquid crystals may be used without change.

In the above-described embodiments 1 through 3, a polyimide film was used as the orientation film utilized in the parallel orientation process, but besides this, a polyamide film, an SiO oblique evaporization film, polyvinyl alcohol, or the like may also be suitably used.

As to the material for the substrates, it is preferable to use soda glass, quartz, non-alkali glass, monocrystalline silicon, sapphire, thermosetting polymer, thermoplasticizing polymer or the like. The polymer material used for the substrate is not particularly limited as long as it does not have a negative effect on the liquid crystal and polymer which are interposed between substrates, and it is preferable to use PET, polyethyl sulfone, epoxy hardening resin, phenoxy resin, polyallyl ether or the like.

In the above-described embodiments 1 through 3, the reflective electrodes were taken to be Cr, but it is also preferable to use a metal such as Al, Cr, Mg, Ag, Au, Pt or the like, or alloys of these. In particular, Cr or an Al-Mg alloy are preferable from the standpoint of stability and reflectance, and in the case of the Al-Mg alloy, it is desirable for the amount of Mg added to be about 0.1 to 10% by weight.

For the liquid crystal, it is preferable to use a material which is normally used in liquid crystal display devices, but in order to improve the degree of scattering, it is desirable for the refractive index anisotropy Δn of the liquid crystal to be not less than about 0.15. In addition, in order to operate MIM elements, it is preferable for the specific resistance value of the liquid crystal alone to be not less than about 1.0 x 10⁹ Ω·cm, and more preferably, not less than about 1.0 x 10¹⁰ Ω·cm in order to increase the retention rate and improve the display quality.

As to the dichroic dye, it is preferable to use azo, anthraquinone, naphthoquinone, perylene, quinophthalone, azomethylene or the like which are normally used in the GH (guest-host) type display. Of these, from the standpoint of light-resistance, it is particularly preferable to use anthraquinone alone or a mixture of this with another pigment, as necessary. These dichroic dye may be mixed depending on the necessary colors.

As polymer precursors, any material is fine as long as it exhibits refractive index anisotropy after polymerization and disperses with directionality in the liquid crystal, but from the standpoint of simplicity in the liquid crystal display device structure, it is desirable to use a ultraviolet ray-hardening monomer. As this ultraviolet ray-hardening monomer, it is preferable to use unifunctional methacrylate, bifunctional methacrylate or multifunctional methacrylate. In order to improve the degree of scattering, it is desirable for these monomers to contain a minimum of one benzene ring in this polymer structure. In particular, materials containing biphenyl, terphenyl or quarterphenyl lattice may be used. These monomers may also contain a chiral component. In addition, these monomers may also polymerize after being irradiated with ultraviolet rays, either alone or after mixing with other monomers.

In addition, in above-described embodiments 2 and 3, a MIM device was used as the two-terminal non-linear device, but it is also possible to use, besides the MIM devices described, lateral MIM devices, back-to-back MIM devices, MSI devices, diode-ring devices or varistor devices. In addition, naturally it is also possible to use three-terminal non-linear devices, and as the three-terminal non-linear devices, it is possible to use polysilicon TFT devices, amorphous silicon TFT devices, Cd-Se TFT devices or the like.

### INDUSTRIAL APPLICATIONS

As described above, with the present invention it is possible, in a polymer dispersed type of liquid crystal display device which does not require a polarizing plate and is bright with no double images, to improve the brightness particularly in a specific direction as a reflective display by controlling the scattering directivity through the rubbing direction which is accomplished on the substrate and the twisting state of the liquid crystal which has dispersed therein and is twist orientated with a polymer. Furthermore, it is possible to adjust the view angle properties of the display which are suitable for the application of the equipment on which the display has been mounted.

As a result, the present invention can be used in liquid crystal display devices suitable for portable applications for which numerous environments are predicted. In addition, it is possible to combine an active matrix with the above structure, and to use the present invention in reflective-type large capacity displays with superior display quality. Furthermore, by combining this with color filters, the present invention can be used in liquid crystal display devices which are capable of color display.

## Claims

1. A liquid crystal display device, of the type comprised of a liquid crystal and a polymer having refractive index anisotropy, of which the polymer is dispersed in the liquid crystal and both are mutually orientated, interposed between a top substrate on which first electrodes are formed and the surface is orientation processed, and a bottom substrate on which second electrodes facing these first electrodes are formed and the surface is orientation processed; wherein the light scattering properties when an electric field is applied are adjusted by a first rubbing direction caused by the orientation processing performed on the top substrate, a second rubbing direction caused by the orientation processing performed on the bottom substrate, the twisting angle of the liquid crystal, and the twisting direction of the liquid crystal, and wherein light incident along a plane of incidence substantially matching a plane containing the direction normal to the surface of the top substrate of the liquid crystal display and a predetermined first direction within the top substrate surface is efficiently scattered.

2. The liquid crystal display device of claim 1, wherein this first direction is the direction determined by the first rubbing direction of the top substrate rotated angularly through half the angle formed by the first rubbing direction and the second rubbing direction, moving from the first rubbing direction of the top substrate to the second rubbing direction of the bottom substrate.

3. The liquid crystal display device of claim 2, wherein the predetermined first direction is the vertical direction of the top substrate in the usage state of the liquid crystal display device.

4. The liquid crystal display device of claim 3, wherein the first rubbing direction of the top substrate is a direction rotated angularly by about half the twisting angle of the liquid crystal, from the left-to-right direction of the top substrate in the usage state of the liquid crystal display device in the twisting direction of the liquid crystal; and, the second rubbing direction of the bottom substrate is a direction having point symmetry or linear symmetry with the first rubbing direction with respect to the vertical direction of the top substrate.

5. The liquid crystal display device of any of claims 1 through 4, wherein the liquid crystal contains a chiral agent in a predetermined amount in accordance with the twisting angle of the liquid crystal.

6. The liquid crystal display device of any of claims 1 through 5, wherein the liquid crystal contains a dichroic dye.

7. The liquid crystal display device of any of claims 1 through 6, wherein the second electrodes of the bottom substrate are formed of a reflective material.

8. A method for producing a liquid crystal display device comprising a liquid crystal and a polymer having refractive index anisotropy, of which the polymer is dispersed in the liquid crystal and both are mutually orientated, interposed between a top substrate on which first electrodes are formed and the surface is orientation processed, and a bottom substrate on which second electrodes facing these first electrodes are formed and the surface is orientation processed, with the liquid crystal being twist orientated with a predetermined twisting angle in a predetermined twisting direction between the top substrate and the bottom substrate, said method comprising the steps of:
forming the first electrodes on the top substrate;
forming a first orientation film on the top substrate;
rubbing the first orientation film in a first rubbing direction which has been rotated angularly by about half the twisting angle of the liquid crystal from the left-to-right direction of the top substrate in the usage state of the liquid crystal display device toward the twisting direction of the liquid crystal;
forming on the bottom substrate the second electrodes capable of facing the first electrodes;
forming a second orientation film on the bottom substrate;
rubbing the second orientation film in a second rubbing direction which is a direction having linear symmetry with the first rubbing direction with respect to the vertical direction of the top substrate in the usage state of the liquid crystal display device;
forming a vacuum panel from the first substrate and the second substrate;
placing a liquid crystal mixture material composed of a liquid crystal composite and a polymer or polymer precursor between the first and second substrates of the vacuum panel; and,
separating out the polymer from the liquid crystal mixture material to cause phase separation between the liquid crystal and the polymer.

9. The method of producing a liquid crystal display device of claim 8, wherein the liquid crystal contains a chiral agent in a predetermined amount in accordance with the twisting angle of the liquid crystal.

10. The method of producing a liquid crystal display device of either claim 8 or claim 9, wherein an ultraviolet light hardening monomer is used as the polymer precursor and the procedure for separating out the polymer from the liquid crystal mixture material and mutually separating the liquid crystal and the polymer is a procedure which irradiates the liquid crystal mixture material with ultraviolet rays, thereby separating out the polymer by polymerizing the monomer, and mutually separating the liquid crystal and the polymer.
